# EUROPÄISCHE PATENTSCHRIFT

(11) **EP 0 810 255 B1**
(45) Veröffentlichungstag und Bekanntmachung des Hinweises auf die Patenterteilung: **27.08.2003**
(21) Anmeldenummer: 97102644.8
(22) Anmeldetag: 19.02.1997
(51) Int. Cl.: C08J 5/18, C08L 53/02, B01J 19/00

(54) **Verfahren zum Verpacken luft- und/oder feuchtigkeitsempfindlicher Stoffe und zum Einbringen der verpackten Stoffe in einen Reaktor**
Process for packaging air and/or moisture sensible materials and for introducing the packaged materials into a reactor
Procédé d'emballage de materières sensibles à l'air et/ou à l'humidité et d'introduction de ces materières emballées dans un réacteur

(30) Priorität: 30.05.1996 DE 19621661
(43) Veröffentlichungstag der Anmeldung: 03.12.1997
(73) Patentinhaber: Chemetall GmbH, 60487 Frankfurt (DE)
(72) Erfinder: Fritz, Serge, Dr., 60385 Frankfurt am Main (DE); Feldmann, Reinhold, 33790 Halle (DE)
(74) Vertreter: Uppena, Franz, Dr.

(56) Entgegenhaltungen:
- EP-A- 0 487 858
- CH-A- 431 949
- FR-A- 2 036 477
- GB-A- 2 011 447
- GB-A- 2 168 362
- DATABASE WPI Section Ch, Week 7745 Derwent Publications Ltd., London, GB; Class A12, AN 77-80267Y XP002038249 & JP 52 115 855 A (GUNZE KK) , 28.September 1977
- PATENT ABSTRACTS OF JAPAN vol. 008, no. 077 (C-218), 10.April 1984 & JP 58 225146 A (DENKI KAGAKU KOGYO KK), 27.Dezember 1983,
- PATENT ABSTRACTS OF JAPAN vol. 018, no. 319 (M-1623), 17.Juni 1994 & JP 06 072469 A (MITSUBISHI MATERIALS CORP), 15.März 1994,

## Beschreibung

Die Erfindung betrifft ein Verfahren zum luftdichten und/oder feuchtigkeitsdichten Verpacken luftempfindlicher und/oder feuchtigkeitsempfindlicher Stoffe mittels einer löslichen Polymerfolie und ein Verfahren zum Einbringen der verpackten Stoffe in einen Reaktor mittels einer löslichen Polymerfolie.

Luftempfindliche und/oder feuchtigkeitsempfindliche Stoffe, wie Alkalimetallalkoholate und Hydride, werden für eine Lagerung und zu Transportzwecken unter Schutzgas, beispielsweise Argon oder Stickstoff, in Kunststoffolien verpackt, die dann hermetisch verschlossen werden. Als Kunststoffolien werden zum Beispiel Polyäthylen(PE)-Folien verwendet. Ebenso können luftempfindliche und/oder feuchtigkeitsempfindliche Stoffe in löslichen Polyurethan(PU)-Folien oder löslichen Folien aus Ethylen-Ethylvinyl-Acetat (EVA) verpackt werden. Folien aus PU besitzen aber den Nachteil, daß eventuell gesundheitsgefährdende Zersetzungsprodukte, wie beispielsweise Diamine, bei der Auflösung der PU-Folien entstehen können. Bei den Folien aus EVA ist es nachteilig, daß sie nur in Toluol, einem gesundheitsschädlichen Lösungsmittel, und nur bei einer Temperatur größer ca. 60°C aufzulösen sind. Zur Freisetzung des darin verpackten Stoffs in einem chemischen Reaktor ist man daher entweder an das Lösungsmittel Toluol sowie an eine Erhitzung auf diese Temperatur gebunden, oder die Folienverpackung muß geöffnet werden, und der Stoff muß mit Hilfe einer Schleuse in den chemischen Reaktor eingebracht werden.

Es ist daher die Aufgabe der vorliegenden Erfindung, die Nachteile des Standes der Technik zu überwinden und ein Verfahren zur Verpackung von luft- und/oder feuchtigkeitsempfindlichen Stoffen zu schaffen, das technisch einfach und kostengünstig ist und neben der technisch geforderten Luft- und/oder Feuchtigkeitdichte der Verpackung auch ein einfaches Einbringen des Stoffs in einen chemischen Reaktor gestattet. Dabei sollte die Verpackung einfach aufzulösen sein, das bedeutet, daß sie in organischen Lösungsmitteln bei einer Temperatur von 20 bis 60°C löslich sein muß, und bei der Auflösung sollen keine gesundheitsgefährdenden Stoffe entstehen.

Es wurde überraschend gefunden, daß die Aufgabe mit einer Polymerfolie, deren Zusammensetzung an sich aus den Druckschriften EP-A 487 858, GB-A 2168 362 und JP-A 52 115 855 bekannt ist, gelöst werden kann. Diese Folie enthält
a) 30 bis 99,5 Gew.-% eines thermoplastischen Polymers, welches aus Styrol-Butadien-Copolymeren mit einem Anteil an gebundenem Styrol von 60 bis 85 Gew.-% besteht und einen Zug-E-Modul von 1100 bis 1800 MPa aufweist, und
b) 0,5 bis 70 Gew.-% eines thermoplastischen Kautschuks, welcher aus Styrol-Butadien-Copolymeren mit einem Anteil an gebundenem Styrol von 25 bis 35 Gew.-% besteht und einen Zug-E-Modul von 2,6 bis 3,5 MPa aufweist.

Der Zug-E-Modul des thermoplastischen Polymers bezieht sich auf den E-Modul gemessen nach ISO 527; der Zug-E-Modul des thermoplastischen Kautschuks wird hier nach ISO 37 ermittelt. Überraschenderweise wurde gefunden, daß durch die Zusammensetzung der Folie eine technisch ausreichende Luft- und Feuchtigkeitdichte und zugleich eine gute Löslichkeit der Polymerfolie in organischen Lösungsmitteln, beispielsweise in Diethylether, tertiärem Butylmethylether (MTBE), Tetrahydrofuran (THF), Dimethylformamid (DMF), Glykolether, Diethylenglykol-Dimethylether, Diisopropylether, Dioxan, Dibutylether, Toluol, Cyclohexan und Xylol bei einer Temperatur von 20 bis 60°C gegeben ist. In Hexan und Heptan ist die Folie bei einer Temperatur von 60°C gut löslich. Die maximale Wasserdampf-Permeabilität der löslichen Polymerfolie bei Raumtemperatur liegt typisch in einem Bereich von 5 bis 10 g/m²/24h, bezogen auf eine Temperatur von 23°C und eine relative Feuchtigkeit von 85 % gegen 0 %. Für Sauerstoff beträgt die maximale Durchlässigkeit typisch 5500 bis 6000 cm³/m²/24h/bar bei einer Temperatur von 23 °C und einer relativen Feuchte von 0 %. Die Polymerfolie kann auch noch weitere Bestandteile in geringen Mengen, wie zum Beispiel Verarbeitungshilfsmittel, Weichmacher und Antioxidationsmittel enthalten.

Nach dem erfindungemäßen Verfahren werden luftempfindliche und/oder feuchtigkeitsempfindliche Stoffe in dieser löslichen Polymerfolie luftdicht und/oder feuchtigkeitsdicht verpackt, indem die Stoffe in die lösliche Polymerfolie eingebracht werden und die lösliche Polymerfolie anschließend luftdicht und/oder feuchtigkeitsdicht verschlossen wird. Das Verschließen der löslichen Polymerfolie kann beispielsweise mit Hilfe von handelsüblichen Trennaht- oder Wärmeimpulsschweißanlagen erfolgen.

Gemäß einer bevorzugten Ausgestaltung der Erfindung beträgt in der als Verpackungsmaterial dienenden löslichen Polymerfolie der Anteil an thermoplastischem Polymer 50 bis 80 Gew.-% und der Anteil an thermoplastischem Kautschuk 20 bis 50 Gew.-%.

Diese Zusammensetzung gewährleistet eine gute Verarbeitbarkeit und Festigkeit der Polymerfolie im erfindungsgemäßen Verfahren.

Gemäß einer weiteren Ausgestaltung der Erfindung beträgt der Anteil in der löslichen Polymerfolie an thermoplastischem Polymer ca. 67 Gew.-% und der Anteil an thermoplastischem Kautschuk ca. 33 Gew.-%. Bei dieser Zusammensetung ist die Verarbeitbarkeit und Haltbarkeit der Polymerfolie sehr gut.

Gemäß einer weiteren Ausgestaltung der Erfindung weist das thermoplastische Polymer einen Anteil an gebundenem Styrol von 70 bis 80 Gew.-% und der thermoplastische Kautschuk einen Anteil an gebundenem Styrol von 28,5 bis 30,5 Gew.-% auf. Mit diesen beiden Stoffen weist die Polymerfolie bei Verwendung im erfindungsgemäßen Verfahren eine sehr gute Verarbeitbarkeit und Festigkeit auf, und die Luft- und/oder Feuchtigkeitdichte ist relativ gut. Als thermoplastisches Polymer kann beispielsweise ein Produkt der Fa. BASF AG mit der Handelsbezeichnung Styrolux, und als thermoplastischer Kautschuk kann ein Produkt mit der Bezeichnung KRATON der Fa. Shell AG eingesetzt werden. Insbesondere mit einer Zusammensetzung von ca. 67 Gew.-% eines Styrolux-Typs und ca. 33 Gew.-% eines KRATON-Typs lassen sich sehr gute Eigenschaften der Polymerfolie für den Einsatz im erfindungsgemäßen Verfahren erreichen. Diese Produkte sind zudem als Verpackungsmaterial gesundheitlich unbedenklich. Sie besitzen die Zulassung der Food and Drug Administration (FDA) in den USA und des Bundesgesundheitsamts (BGA) in Deutschland und können in Kontakt mit Lebensmitteln oder für pharmazeutische Verfahren verwendet werden.

Nach einer weiteren Ausgestaltung des erfindungsgemäßen Verfahrens weist die lösliche Polymerfolie eine Dicke von 15 bis 300 µm, insbesondere 50 bis 100 µm, auf.

Nach einer weiteren Ausgestaltung des erfindungsgemäßen Verfahrens ist der luftempfindliche und/oder feuchtigkeitsempfindliche Stoff ein Alkalimetallalkoholat oder ein Hydrid.

Nach einer weiteren Ausgestaltung des erfindungsgemäßen Verfahrens ist der luftempfindliche und/oder feuchtigkeitsempfindliche Stoff Lithiumaluminiumhydrid (LiAlH₄) oder Natriumhydrid (NaH).

Nach einer weiteren Ausgestaltung des erfindungsgemäßen Verfahrens liegt der luftempfindliche und/oder feuchtigkeitsempfindliche Stoff in Form eines Pulvers oder eines Granulats vor.

Nach einer weiteren Ausgestaltung der Erfindung wird der luftempfindliche und/oder feuchtigkeitsempfindliche Stoff in einen chemischen Reaktor eingebracht mit Hilfe eines Verfahrens, bei dem
a) der luftempfindliche und/oder feuchtigkeitsempfindliche Stoff in der lösliche Polymerfolie luftdicht und/oder feuchtigkeitsdicht verpackt ist,
b) der in der löslichen Polymerfolie verpackte luftempfindliche und/oder feuchtigkeitsempfindliche Stoff in einen chemischen Reaktor eingebracht wird, der ein organisches Lösungmittel enthält, und
c) die lösliche Polymerfolie in dem organischen Lösungsmittel ganz oder teilweise aufgelöst wird.

Durch die Auflösung der Polymerfolie durch das im chemischen Reaktor enthaltene organische Lösungsmittel wird der darin enthaltene luftempfindliche und/oder feuchtigkeitsempfindliche Stoff im Reaktor freigesetzt.

Gemäß einer weiteren Ausgestaltung der Erfindung ist vorgesehen, daß das organische Lösungsmittel Diethylether, tertiärer Butylmethylether (MTBE), Tetrahydrofuran (THF), Dimethylformamid (DMF), Glykolether, Diethylenglykol-Dimethylether, Diisopropylether, Dioxan, Dibutylether, Cyclohexan, Toluol oder Xylol oder ein Gemisch aus zwei oder mehreren dieser Stoffe ist.

Gemäß einer weiteren Ausgestaltung der Erfindung ist vorgesehen, daß das organische Lösungsmittel Tetrahydrofuran (THF), Dimethylformamid (DMF) oder Toluol ist.

Der Gegenstand der Erfindung wird nun anhand eines Beispiels näher erläutert.

### Beispiel :

In die beschriebene lösliche Polymerfolie wurde Lithiumaluminiumhydrid eingegeben. Die Folie wurde anschließend mit Hilfe einer Trennaht- oder Wärmeimpulsschweißanlage verschlossen. Die mit Lithiumaluminiumhydrid gefüllte, verschlossene Folie wurde in einen chemischen Reaktor eingebracht. Durch das im chemischen Reaktor enthaltene organische Lösungsmitel wurde das Lithiumaluminiumhydrid durch Auflösen der Folie freigesetzt, um eine Reduktionsreaktion durchzuführen.

## Patentansprüche

1. Verfahren zur luftdichten und/oder feuchtigkeitsdichten Verpackung von luftempfindlichen und/oder feuchtigkeitsempfindlichen Stoffen, **dadurch gekennzeichnet, daß** der luftempfindliche und/oder feuchtigkeitsempfindliche Stoff in eine lösliche Polymerfolie, bestehend aus
a) 30 bis 99,5 Gewichts-% eines thermoplastischen Polymers, welches aus Styrol-Butadien-Copolymeren mit einem Anteil an gebundenem Styrol von 60 bis 85 Gew.-% besteht und einen Zug-E-Modul von 1100 bis 1800 MPa aufweist, und
b) 0,5 bis 70 Gewichts-% eines thermoplastischen Kautschuks, welcher aus Styrol-Butadien-Copolymeren mit einem Anteil an gebundenem Styrol von 25 bis 35 Gew.-% besteht und einen Zug-E-Modul von 2,6 bis 3,5 MPa aufweist,
eingebracht wird und daß die Polymerfolie anschließend luftdicht und oder feuchtigkeitsdicht verschlossen wird.

2. Verfahren nach Anspruch 1, **dadurch gekennzeichnet, daß** in der löslichen Polymerfolie der Anteil
a) des thermoplastischen Polymers 50 bis 80 Gewichts-% und der Anteil
b) des thermoplastischen Kautschuks 20 bis 50 Gewichts-% beträgt.

3. Verfahren nach einem der Ansprüche 1 bis 2, **dadurch gekennzeichnet, daß** in der löslichen Polymerfolie der Anteil
a) des thermoplastischen Polymers 67 Gewichts-% und der Anteil
b) des thermoplastischen Kautschuks 33 Gewichts-% beträgt.

4. Verfahren nach einem der Ansprüche 1 bis 3, **dadurch gekennzeichnet, daß** in der löslichen Polymerfolie das thermoplastische Polymer einen Anteil an gebundenem Styrol von 70 bis 80 Gewichts-% und der thermoplastische Kautschuk einen Anteil an gebundenem Styrol von 28,5 bis 30,5 Gewichts-% aufweist.

5. Verfahren nach einem der Ansprüche 1 bis 4, **dadurch gekennzeichnet, daß** die lösliche Polymerfolie eine Dicke von 15 bis 300 µm aufweist.

6. Verfahren nach einem der Ansprüche 1 bis 5, **dadurch gekennzeichnet, daß** die lösliche Polymerfolie eine Dicke von 50 bis 100 µm aufweist.

7. Verfahren nach einem der Ansprüche 1 bis 6, **dadurch gekennzeichnet, daß** der luftempfindliche und/oder feuchtigkeitsempfindliche Stoff ein Alkalimetallalkoholat oder ein Hydrid ist.

8. Verfahren nach Anspruch 7, **dadurch gekennzeichnet, daß** der luftempfindliche und/oder feuchtigkeitsempfindliche Stoff Lithiumaluminiumhydrid (LiAlH₄) oder Natriumhydrid (NaH) ist.

9. Verfahren nach einem der Ansprüche 1 bis 8, **dadurch gekennzeichnet, daß** der luftempfindliche und/oder feuchtigkeitsempfindliche Stoff in Form eines Pulvers oder eines Granulats vorliegt.

10. Verfahr zum Einbringen eines luftempfindlichen und/oder feuchtigkeitsempfindlichen Stoffs in einen chemischen Reaktor, bei dem
a) der luftempfindliche und/oder feuchtigkeitsempfindliche Stoff in eine lösliche Polymerfolie, bestehend aus
30 bis 99,5 Gewichts-% eines thermoplastischen Polymers, welches aus Styrol-Butadien-Copolymeren mit einem Anteil an gebundenem Styrol von 60 bis 85 Gew.-% besteht und einen Zug-E-Modul von 1100 bis 1800 MPa aufweist, und
0,5 bis 70 Gewichts-% eines thermoplastischen Kautschuks, welcher aus Styrol-Butadien-Copolymeren mit einem Anteil an gebundenem Styrol von 25 bis 35 Gew.-% besteht und einen Zug-E-Modul von 2,6 bis 3,5 MPa aufweist,
luftdicht und/oder feuchtigkeitsdicht verpackt ist,
b) der in der löslichen Polymerfolie verpackte luftempfindliche und/oder feuchtigkeitsempfindliche Stoff in einen chemischen Reaktor eingebracht wird, der ein organisches Lösungmittel enthält, und
c) die lösliche Polymerfolie in dem organischen Lösungsmittel ganz oder teilweise aufgelöst wird.

11. Verfahren nach Anspruch 10, bei dem das organische Lösungsmittel Diethylether, tertiärer Butylmethylether (MTBE), Tetrahydrofuran (THF), Dimethylformamid (DMF), Glykolether, Diethylenglykol-Dimethylether, Diisopropylether, Dioxan, Dibutylether, Cyclohexan, Toluol oder Xylol oder ein Gemisch aus zwei oder mehreren dieser Stoffe ist.

12. Verfahren nach Anspruch 11, bei dem das organische Lösungsmittel Tetrahydrofuran (THF), Dimethylformamid (DMF) oder Toluol ist.

## Claims

1. Method for packaging air-sensitive and/or moisture-sensitive substances in an air-tight and/or moisture-tight manner, **characterised in that** the air-sensitive and/or moisture-sensitive substance is introduced into a soluble polymer film, consisting of
a) 30 to 99.5% by weight of a thermoplastic polymer which consists of styrene-butadiene copolymers with a bound styrene content of 60 to 85% by weight and has a modulus of elasticity in tension of 1100 to 1800 MPa and
b) 0.5 to 70% by weight of a thermoplastic rubber which consists of styrene-butadiene copolymers with a bound styrene content of 25 to 35% by weight and has a modulus of elasticity in tension of 2.6 to 3.5 MPa,
and **in that** the polymer film is subsequently sealed in an air-tight and/or moisture-tight manner.

2. Method according to claim 1, **characterised in that** in the soluble polymer film the content
a) of the thermoplastic polymer amounts to 50 to 80% by weight, and the content
b) of the thermoplastic rubber amounts to 20 to 50% by weight.

3. Method according to one of claims 1 to 2, **characterised in that** in the soluble polymer film the content
a) of the thermoplastic polymer amounts to 67% by weight, and the content
b) of the thermoplastic rubber amounts to 33% by weight.

4. Method according to one of claims 1 to 3, **characterised in that** in the soluble polymer film the thermoplastic polymer has a bound styrene content of 70 to 80% by weight, and the thermoplastic rubber has a bound styrene content of 28.5 to 30.5% by weight.

5. Method according to one of claims 1 to 4, **characterised in that** the soluble polymer film has a thickness of 15 to 300 µm.

6. Method according to one of claims 1 to 5, **characterised in that** the soluble polymer film has a thickness of 50 to 100 µm.

7. Method according to one of claims 1 to 6, **characterised in that** the air-sensitive and/or moisture-sensitive substance is an alkali metal alcoholate or a hydride.

8. Method according to claim 7, **characterised in that** the air-sensitive and/or moisture-sensitive substance is lithium aluminium hydride (LiAlH₄) or sodium hydride (NaH).

9. Method according to one of claims 1 to 8, **characterised in that** the air-sensitive and/or moisture-sensitive substance is present in the form of a powder or a granulated material.

10. Method for introducing an air-sensitive and/or moisture-sensitive substance into a chemical reactor, wherein
a) the air-sensitive and/or moisture-sensitive substance is packed in an air-tight and/or moisture-tight manner into a soluble polymer film, consisting of
30 to 99.5% by weight of a thermoplastic polymer which consists of styrene-butadiene copolymers with a bound styrene content of 60 to 85% by weight and has a modulus of elasticity in tension of 1100 to 1800 MPa and
0.5 to 70% by weight of a thermoplastic rubber which consists of styrene-butadiene copolymers with a bound styrene content of 25 to 35% by weight and has a modulus of elasticity in tension of 2.6 to 3.5 MPa,
b) the air-sensitive and/or moisture-sensitive substance packed in the soluble polymer film is introduced into a chemical reactor which contains an organic solvent, and
c) the soluble polymer film is completely or partly dissolved in the organic solvent.

11. Method according to claim 10, wherein the organic solvent is diethyl ether, methyl tert-butyl ether (MTBE), tetrahydrofuran (THF), dimethyl formamide (DMF), glycol ether, diethylene glycol dimethyl ether, diisopropyl ether, dioxane, dibutyl ether, cyclohexane, toluene or xylene or a mixture of two or more of these substances.

12. Method according to claim 11, wherein the organic solvent is tetrahydrofuran (THF), dimethyl formamide (DMF) or toluene.

## Revendications

1. Procédé pour emballer des matières sensibles à l'air et/ou à l'humidité dans un emballage étanché à l'air et/ou à l'humidité, **caractérisé par le fait que** la matière sensible à l'air et/ou à l'humidité est enfermée dans une feuille de polymère soluble, constituée
a) de 30 à 99,5 % en poids d'un polymère thermoplastique formé d'un copolymère styrène-butadiène ayant une teneur en styrène lié comprise entre 60 et 85 % en poids et un module de traction E compris entre 1100 et 1800 MPa, et
b) de 0,5 à 70 % en poids d'un caoutchouc thermoplastique formé d'un copolymère styrène-butadiène ayant une teneur en styrène lié comprise entre 25 et 35 % en poids, et un module de traction E compris entre 2,6 et 3,5 MPa,
et que la feuille de polymère est ensuite fermée de manière à être imperméable à l'air et/ou à l'humidité.

2. Procédé selon la revendication 1, **caractérisé par le fait que**, dans la feuille de polymère soluble,
a) la fraction de polymère thermoplastique est comprise entre 50 % et 80 % en poids et
b) la fraction de caoutchouc thermoplastique est comprise entre 20 % et 50 % en poids,

3. Procédé selon une des revendications 1 à 2, **caractérisé par le fait que**, dans la feuille de polymère soluble,
a) la fraction de polymère thermoplastique est de 67 % en poids et
b) la fraction de caoutchouc thermoplastique est égale à 33 % en poids.

4. Procédé selon l'une des revendications 1 à 3, **caractérisé par le fait que**, dans la feuille de polymère soluble, le polymère thermoplastique a une teneur en styrène lié comprise entre 70 et 80 % en poids et le caoutchouc thermoplastique a une teneur en styrène lié comprise entre 28,5 et 30,5 % en poids.

5. Procédé selon l'une des revendications 1 à 4, **caractérisé par le fait que** la feuille de polymère soluble a une épaisseur comprise entre 15 et 300 µm.

6. Procédé selon l'une des revendications 1 à 5, **caractérisé par le fait que** la feuille de polymère soluble a une épaisseur comprise entre 50 et 100 µm.

7. Procédé selon l'une des revendications 1 à 6, **caractérisé par le fait que** la matière sensible à l'air et/ou à l'humidité est un alcoolate de métal alcalin ou un hydrure de métal alcalin.

8. Procédé selon la revendication 7, **caractérisé par le fait que** la matière sensible à l'air et/ou à l'humidité est l'hydrure de lithium-aluminium (LiAlH₄) ou l'hydrure de sodium (NaH).

9. Procédé selon l'une des revendications 1 à 8, **caractérisé par le fait que** la matière sensible à l'air et/ou à l'humidité se présente sous forme d'une poudre ou de granulés.

10. Procédé pour introduire une matière sensible à l'air et/ou à l'humidité dans un réacteur chimique, dans lequel
a) la matière sensible à l'air et/ou à l'humidité est emballée dans une feuille en polymère soluble, constituée de 30 à 99,5 % en poids d'un polymère thermoplastique formé d'un copolymère styrène-butadiène ayant une teneur en styrène lié comprise entre 60 et 85 % en poids et un module de traction E compris entre 1100 et 1800 MPa, et de 0,5 à 70 % en poids d'un caoutchouc thermoplastique formé d'un copolymère styrène-butadiène ayant une teneur en styrène lié comprise entre 25 et 35 % en poids et un module de traction E compris entre 2,6 et 3,5 MPa,
b) la matière sensible à l'air et/ou à l'humidité, emballée dans la feuille de polymère soluble, est introduite dans un réacteur chimique contenant un solvant organique, et
c) la feuille de polymère soluble est dissoute partiellement ou totalement dans le solvant organique.

11. Procédé selon la revendication 10, dans lequel le solvant organique est l'éther diéthylique, le tert-butylméthyléther (MTBE), le tétrahydrofurane (THF), le diméthylformamide (DMF), l'éther de glycol, l'éther diméthylique de diéthylèneglycol, le diisopropyléther, le dioxane, le dibutyléther, le cyclohexane, le toluène ou le xylène ou un mélange de deux ou plusieurs de ces substances.

12. Procédé selon la revendication 11, dans lequel le solvant organique est le tétrahydrofurane (THF), le diméthylformamide (DMF) ou le toluène.
